# EUROPÄISCHE PATENTSCHRIFT

(11) **EP 2 146 858 B1**
(45) Veröffentlichungstag und Bekanntmachung des Hinweises auf die Patenterteilung: **28.11.2012**
(21) Anmeldenummer: 08735213.4
(22) Anmeldetag: 14.04.2008
(51) Int. Cl.: B60K 15/03

(54) **Kraftfahrzeug mit Sicherheitsanordnung für Gastank**
Motor vehicle with safety arrangement for gas tank
Véhicule automobile avec arrangement de sécurité pour réservoir à gaz

(30) Priorität: 13.04.2007 DE 102007017429
(43) Veröffentlichungstag der Anmeldung: 27.01.2010
(73) Patentinhaber: GM Global Technology Operations LLC, Detroit, MI 48265-3000 (US)
(72) Erfinder: ELSENHEIMER, Willi, 65439 Flörsheim (DE); POKLITAR, Mathias, 65474 Bischofsheim (DE); WROBEL, Bert, 55278 Undenheim (DE)
(74) Vertreter: Strauss, Peter
(86) Internationale Anmeldenummer: PCT/EP2008/002932
(87) Internationale Veröffentlichungsnummer: WO 2008/125316

(56) Entgegenhaltungen:
- EP-A- 1 591 704
- EP-A- 1 746 380
- DE-A1- 19 627 987
- DE-A1-102006 020 388

## Beschreibung

Die vorliegende Erfindung liegt auf dem technischen Gebiet der Fahrzeugtechnik und betrifft ein mit Gaskraftstoff betreibbares Kraftfahrzeug mit einer Sicherheitsanordnung für einen Gastank.

Angesichts steigender Kraftstoffpreise und vor dem Hintergrund gestiegener Anforderungen an die Abgasemissionen werden moderne Kraftfahrzeuge zunehmend mit alternativen Antriebsarten/Energiequellen ausgestattet. So können bivalent betreibbare Kraftfahrzeuge wahlweise mit Flüssigkraftstoff (Benzin) oder mit Gaskraftstoff betrieben werden.

Als Gaskraftstoffe werden hauptsächlich in flüssiger Form im Gastank gespeicherte Flüssiggase auf Petroleumbasis, wie Autogas (LPG = Liquified Petroleum Gas), und in gasförmiger Form im Gastank gespeicherte Gaskraftstoffe, wie Erdgas (CNG = Compressed Natural Gas), verwendet. Autogas besteht im Wesentlichen aus Propan und Butan und tritt als Nebenprodukt aus Hydrierprozessen bei der Erdölraffinierung auf, wohingegen Erdgas hauptsächlich aus Methan besteht und durch Förderung aus Erdgasquellen gewonnen wird.

Mit Gaskraftstoff betreibbare Kraftfahrzeuge sind mit einem Gastank versehen, in dem der Gaskraftstoff in verdichteter Form gespeichert wird. Beispielsweise wird CNG mit einem Druck von 200-300 bar im Gastank gespeichert. Der Gastank, welcher in Form mehrerer miteinander verbundener, beispielsweise flaschenförmiger Gasdruckbehälter ausgebildet sein kann, ist am Fahrzeugaufbau montiert und zu diesem Zweck insbesondere am Fahrzeugboden (Bodengruppe) oder den Hauptlängsträgern befestigt. Üblich ist auch das Anbringen des Gastanks in einer Vertiefung des Kofferraumbodens des Kraftfahrzeugs, die ansonsten als Reserveradmulde zur Aufnahme des Reserverads dient.

Zur Befestigung des Gastanks am Fahrzeugboden dienen beispielsweise mit dem Fahrzeug verbundene Spannbänder, die über den Gastank gespannt werden.

Der Gastank ist gewöhnlich mit einem elektromagnetisch betätigten Gasdruckventil versehen, durch welches ein bidirektionaler Gaskraftstoffstrom zum Befüllen des Gastanks und zum Zuführen von Gaskraftstoff zur Brennkraftmaschine gesteuert werden kann. Einfache Gasventile zur Steuerung des Gasstroms werden einer herkömmlichen T-Form nachgebildet, wie sie auch von Taucherflaschen her bekannt ist. Zur Verbindung mit dem Gastank werden die Gasventile gewöhnlich mittels eines mit einem Außengewinde versehenen Ventilkörpers in eine Gewindeöffnung des Gastanks eingeschraubt. Der Ventilkörper selbst ist mit Steuereinrichtungen zur Steuerung des Gasstroms, sowie mit Anschlussstutzen zum Anschluss von Kraftstoffleitungen versehen.

Für die Verwendung in einem Kraftfahrzeug müssen Gastank und Gasventil gewisse Sicherheitsstandards erfüllen, wobei insbesondere im Falle eines Fahrzeugbrands ein überdruckbedingtes Bersten des Gastanks verhindert werden muss. Zu diesem Zweck ist u.a. ein beispielsweise über eine Berstscheibe gesichertes Überdruckventil und/oder eine thermische Schmelzsicherung vorgesehen, welche dafür sorgen, dass im Falle eines überhitzungsbedingten Überdrucks im Gastank bzw. bei hitzebedingter Schwächung des Gastanks der Gaskraftstoff kontrolliert abgeblasen wird.

In praktischen Tests hat sich gezeigt, dass im Falle eines Fahrzeugbrands der über eine solche Sicherheitseinrichtung aus dem Gastank ausströmende Gaskraftstoff sofort Feuer fängt. Befindet sich der Gastank in einer Vertiefung des Kofferraumbodens, bedeutet dies, dass der ausströmende Gasstrom möglichst schnell aus dem Fahrzeuginneren geleitet werden muss.

Bislang wurde zur Lösung dieses Problems eine Öffnung im Kofferraumboden vorgesehen, durch welche der aus dem Gasventil über die Sicherheitseinrichtung ausströmende Gaskraftstoff aus dem Kofferraum ins Freie gelangen kann. Nachteilig hierbei ist insbesondere die Tatsache, dass hierdurch eine undichte Stelle des Kofferraumbodens erzeugt wird, durch welche Feuchtigkeit und Schmutz in den Kofferraum und damit gegebenenfalls auch in die Fahrgastzelle eindringen können. Aus diesem Grund ist es erforderlich, eine relativ kleine Öffnung im Kofferraumboden vorzusehen, was sich jedoch nachteilig auf deren Eignung zum Ableiten des aus dem Gastank ausströmenden Gaskraftstoffs auswirkt. Zudem können durch die Öffnung schädliche Abgase in den Kofferraum und gegebenenfalls in die Fahrgastzelle eindringen.

Die europäische Patentanmeldung Nr. 1591704 A1 beschreibt ein mit Gaskraftstoff betreibbares Fahrzeug nach dem Oberbegriff des Anspruchs 1 mit einer Sicherheitsöffnung im Fahrzeugboden, durch welche Gaskraftstoff zur Fahrzeugaußenseite geführt werden kann.

Demgegenüber besteht die Aufgabe der vorliegenden Erfindung darin, eine Sicherheitsanordnung für einen Gastank eines Kraftfahrzeugs anzugeben, durch welche die genannten Nachteile vermieden werden können. So soll eine ausreichende Ableitung von aus dem Gastank über eine Sicherheitseinrichtung ausströmenden Gaskraftstoff ins Freie sichergestellt sein, ohne dass während des normalen Betriebs des Kraftfahrzeugs Feuchtigkeit, Schmutz oder Abgase in den Kofferraum eindringen können.
Diese Aufgabe wird nach dem Vorschlag der Erfindung durch ein Kraftfahrzeug mit einer Sicherheitsanordnung für einen Gastank mit den Merkmalen des unabhängigen Anspruchs gelöst. Vorteilhafte Ausgestaltungen der Erfindung sind durch die Merkmale der Unteransprüche angegeben. Erfindungsgemäß ist ein Kraftfahrzeug mit einem fahrzeuginnenseitig befindlichen Gastank für Gaskraftstoff mit einer Sicherheitsanordnung für den Gastank gezeigt. Die Sicherheitsanordnung ist so ausgebildet, dass aus dem Gastank abgeblasener Gaskraftstoff zur Fahrzeugaußenseite abgeleitet werden kann.

Bei dem Gastank handelt es sich um einen metallischen oder nichtmetallischer Druckgasbehälter, der der Speicherung von Gaskraftstoff des mit Gaskraftstoff antreibbaren Kraftfahrzeugs dient. Der Gastank befindet sich in diesem Fall fahrzeuginnenseitig, auf der der Fahrgastzelle zugewandten Seite des Fahrzeugbodens. Insbesondere befindet sich der Gastank innerhalb des Kofferraums, hier beispielsweise in einer Vertiefung des Kofferraumbodens.

Der Gastank ist in herkömmlicher Weise mit wenigstens einer Sicherheitsgasabblaseinrichtung versehen, wie beispielsweise ein durch eine Berstscheibe gesichertes Überdruckventil oder eine Schmelzsicherung, durch welche oberhalb eines wählbaren, hitzebedingten Gasüberdrucks im Gastank und/oder oberhalb einer wählbaren, hitzebedingten (Über-)Temperatur Gaskraftstoff kontrolliert abgeblasen werden kann. Derartige Sicherheitsgasabblaseinrichtungen werden in den Druckgasbehältern von mit Gaskraftstoff antreibbaren Kraftfahrzeugen heutzutage regelmäßig eingesetzt, so dass sich eine nähere Erläuterung hier erübrigt.

Die Sicherheitsanordnung umfasst eine den Fahrzeugboden durchbrechende Sicherheitsöffnung, die durch ein Verschlusselement verschlossen ist bzw. verschlossen werden kann. Die Sicherheitsöffnung ist strömungstechnisch mit der Sicherheitsgasabblaseinrichtung verbunden, so dass sie von der Sicherheitsgasabblaseinrichtung ausströmenden Gaskraftstoff durch den Fahrzeugboden und damit zur Fahrzeugaußenseite leiten kann. Befindet sich der Gastank innerhalb des Kofferraums ist die Sicherheitsöffnung als eine Durchbrechung des Kofferraumbodens ausgebildet.

Im normalen Betrieb des Kraftfahrzeugs ist die Sicherheitsöffnung durch das Verschlusselement verschlossen. Das Verschlusselement ist so ausgebildet, dass es im Störfall, das heißt insbesondere bei einem Fahrzeugbrand, die Sicherheitsöffnung freigibt. Das Verschlusselement ist zu diesem Zweck so ausgebildet, dass es geeignet ist, die Sicherheitsöffnung durch Einwirkung von Wärme (insbesondere erzeugt durch Flammen) und/oder Gasdruck des ausströmenden Gaskraftstoffs freigeben zu können.

Erfindungsgemäß wird der Gaskraftstoff über die Sicherheitsgasabblaseinrichtung des Gastanks in einen Druckraum geblasen, der so ausgebildet ist, dass sich bei unversehrtem Verschlusselement ein Gasüberdruck aufbauen kann, der so auf das Verschlusselement einwirkt, dass die Sicherheitsöffnung geöffnet werden kann. Zu diesem Zweck kann es sich um einen im Wesentlichen gasdichten Druckraum handeln. Alternativ genügt es, wenn der Druckraum so ausgebildet ist, dass sich aufgrund eines vergleichsweise hohen Strömungswiderstands für einen aus der Druckkammer abströmenden Gasstrom ein zumindest transienter Überdruck im Druckraum aufbauen kann.

Bei einer vorteilhaften Ausgestaltung der Sicherheitsanordnung des erfindungsgemäßen Kraftfahrzeugs umfasst der insbesondere gasdichte Druckraum einen durch einen ringförmigen Gastank geformten Ringinnenraum, wobei eine der beiden offenen Seiten des Ringinnenraums durch ein Dichtelement im Wesentlichen gasdicht verschlossen ist und die andere Seite des Ringinnenraums mit der Sicherheitsöffnung mit Verschlusselement strömungstechnisch verbunden ist. Bei einem ringförmigen Gastank ist es besonders vorteilhaft, wenn die Sicherheitsöffnung mit Verschlusselement räumlich an den Ringinnenraum angrenzt.

Das Verschlusselement kann hierbei so ausgebildet sein, dass es die Sicherheitsöffnung durch Einwirkung von Wärme erst oberhalb einer wählbaren Schwelltemperatur freigibt. Das Verschlusselement kann auch so ausgebildet sein, dass es die Sicherheitsöffnung durch Einwirkung von Gasdruck des aus dem Gastank austretenden Gaskraftstoffs erst oberhalb eines wählbaren Schwelldrucks freigibt.

Somit kann in vorteilhafter Weise durch die Sicherheitsanordnung des erfindungsgemäßen Kraftfahrzeugs gewährleistet werden, dass im Störfall (z. B. Fahrzeugbrand) eine ausreichende Ableitung von aus dem Gastank an der Sicherheitsgasabblaseinrichtung ausströmender Gaskraftstoff über die Sicherheitsöffnung ins Freie erfolgt, ohne dass während des normalen Betriebs des Kraftfahrzeugs Feuchtigkeit, Schmutz oder Abgase über die Sicherheitsöffnung in den Kofferraum eindringen können, da die Sicherheitsöffnung durch das Verschlusselement verschlossen ist. Die Dimensionierung der Sicherheitsöffnung kann in der Sicherheitsanordnung des erfindungsgemäßen Kraftfahrzeugs entsprechend groß gewählt werden, so dass praktisch der gesamte an der Sicherheitsgasabblaseinrichtung ausströmende Gaskraftstoff über die Sicherheitsöffnung zur Fahrzeugaußenseite geleitet wird. Im Falle eines entzündeten Gaskraftstoffstroms wird die Flamme über die Sicherheitsöffnung durch den Fahrzeugboden aus dem Fahrzeug geleitet.

Bei einer vorteilhaften Ausführungsform der Sicherheitsanordnung des erfindungsgemäßen Kraftfahrzeugs ist das Verschlusselement aus einem Material gefertigt, das einen niedrigeren Schmelzpunkt hat als das Material des Fahrzeugbodens, insbesondere des Kofferraumbodens. Das Material des Verschlusselements ist hierbei so gewählt, dass durch Wärmeeinwirkung, insbesondere durch die Flammen bei einem Fahrzeugbrand, das Verschlusselement zum Schmelzen gebracht wird, so dass die Sicherheitsöffnung freigegeben wird. Insbesondere sind das Material für das Verschlusselement und/oder die Materialdicke des Verschlusselements so wählbar, dass das Verschlusselement oberhalb einer wählbaren Schmelztemperatur und einer wählbaren Einwirkdauer schmilzt.

Bei einer weiteren vorteilhaften Ausführungsform der Sicherheitsanordnung des erfindungsgemäßen Kraftfahrzeugs ist das Verschlusselement aus einem brennbaren Material gefertigt, so dass das Verschlusselement bei einem Fahrzeugbrand durch Wegbrennen (thermische Eliminierung) die Sicherheitsöffnung frei gibt. Die Entzündbarkeit des Materials des Verschlusselements kann hierbei so gewählt werden, dass sich das Material oberhalb einer wählbaren Flammeneinwirkdauer entzündet.

Die auf das Verschlusselement einwirkenden Flammen können fahrzeugaußenseitig und/oder fahrzeuginnenseitig (insbesondere durch den aus dem Gastank austretenden entzündeten Gasstrom) auf das Verschlusselement einwirken.

Bei einer weiteren vorteilhaften Ausführungsform der Sicherheitsanordnung des erfindungsgemäßen Kraftfahrzeugs ist das Verschlusselement mit wenigstens einer Sollbruchstelle versehen, die so ausgebildet ist, dass sie bei Einwirken eines wählbaren Gasdrucks des aus dem Gastank ausströmenden Gaskraftstoffs bricht, so dass die Sicherheitsöffnung freigegeben wird. Das Material für das Verschlusselement und/oder die Auslegung des Verschlusselements können hierbei so gewählt werden, dass die Sollbruchstelle des Verschlusselements oberhalb eines einwirkenden Gasschwelldrucks bricht. Die Sollbruchstelle kann beispielsweise durch eine gezielte Schwächung des das Verschlusselement mit der Sicherheitsöffnung verbindenden Materials ausgebildet sein. Das Verschlusselement kann insbesondere in Form einer Berstplatte ausgebildet sein.

Bei einer weiteren vorteilhaften Ausführungsform der Sicherheitsanordnung des erfindungsgemäßen Kraftfahrzeugs ist das Verschlusselement mittels einer gelenkigen Verbindung, wie ein Scharniergelenk, an den Fahrzeugboden angelenkt und am Fahrzeugboden so befestigt, dass es durch Einwirken eines wählbaren Gasdrucks des aus dem Gastank ausströmenden Gaskraftstoffs die Sicherheitsöffnung frei gibt, wobei es hierbei um die gelenkige Verbindung verschwenkt wird. Das Verschlusselement kann am Fahrzeugboden beispielsweise mittels wenigstens einer Sollbruchstelle befestigt sein. Es kann beispielsweise auch mittels einer kraft- und/oder reibschlüssigen Verbindung am Fahrzeugboden befestigt sein.

Bei einer vorteilhaften Ausgestaltung der Sicherheitsanordnung des erfindungsgemäßen Kraftfahrzeugs besteht die gelenkige Verbindung aus einem bei Wärmeeinwirkung sich verformenden Bimetall, das so ausgebildet ist, dass das Verschlusselement bei Wärmeeinwirkung oberhalb einer wählbaren Schwelltemperatur die Sicherheitsöffnung freigibt.

Die obig erläuterten Ausführungsformen und Ausgestaltungen der Sicherheitsanordnung des erfindungsgemäßen Kraftfahrzeugs können einzeln oder in beliebiger Kombination realisiert sein.

Die Erfindung wird nun anhand von Ausführungsbeispielen näher erläutert, wobei Bezug auf die beigefügten Zeichnungen genommen wird. Gleiche Elemente sind in den Figuren mit den gleichen Bezugszahlen bezeichnet. Es zeigen:
- Fig. 1: eine schematische Schnittdarstellung des Aufbaus eines ersten Ausführungsbeispiels der Sicherheitsanordnung des erfindungsgemäßen Kraftfahrzeugs;
- Fig. 2: eine schematische Schnittdarstellung des Aufbaus eines zweiten Ausführungsbeispiels der Sicherheitsanordnung des erfindungsgemäßen Kraftfahrzeugs.

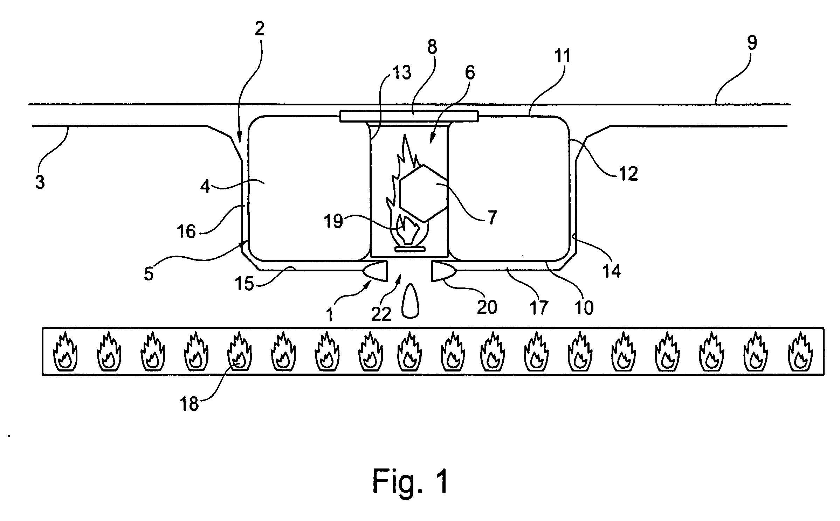

Zunächst wird Bezug auf Fig. 1 genommen, worin in einer schematischen Darstellung der Aufbau eines ersten Ausführungsbeispiels der Sicherheitsanordnung des Gaskraftstoffbehälters eines Kraftfahrzeugs gezeigt ist.

Demnach umfasst die insgesamt mit der Bezugszahl 1 bezeichnete Sicherheitsanordnung einen ringförmigen Druckgasbehälter ("Ringtank") 4, hier beispielsweise für LPG, der in einer in der Draufsicht in etwa kreisförmigen Tiefung 2 des Kofferraumbodens 3 (Reserveradmulde) angeordnet ist. Der ringförmige Druckgasbehälter ist lediglich beispielhaft als ringförmig gezeigt und erläutert. Grundsätzlich ist auch jede andere Druckgasbehälterform möglich.

Lage- und Richtungsangaben, wie "oben", "unten", "vertikal" und "horizontal" werden im Weiteren verwendet, um ein Ausführungsbeispiel der Erfindung näher zu erläutern und entsprechen einer beispielhaften, jedoch nicht zwingend notwendigen Einbaulage des Ringtanks 4 in einem auf einer Fahrbahn stehenden Kraftfahrzeug.

Die den Ringtank 4 aufnehmende Tiefung 2 ist beispielsweise in Richtung zu einer Fahrbahn, auf der sich das Kraftfahrzeug befindet, hin vertieft und umfasst einen im Wesentlichen senkrecht zur Fahrbahn angeordneten (vertikalen), annähernd einen hohlzylindrischen Innenraum umgebenden Wandabschnitt 14, der in einen in etwa parallel zur Fahrbahn angeordneten (horizontalen), annähernd eine Kreisscheibe formenden Bodenabschnitt 15 übergeht.

Der Ringtank 4 ist beispielsweise über (nicht dargestellte) Spanngurte oder Verschraubungen in der Tiefung 3 befestigt. Grundsätzlich ist auch jede andere Befestigungform möglich.

Die Tiefung 2 ist nach oben hin durch eine Teppichauflage 9 abgedeckt.

Der Ringtank 4 wird durch eine insgesamt mit der Bezugszahl 5 bezeichnete Behälterwand geformt, die sich aus verschiedenen Behälterwandabschnitten zusammensetzt. Dies sind ein ringaußenseitiger Behälterwandabschnitt 12, der dem vertikalen Wandabschnitt 14 der Tiefung 2 gegenüberliegt, ein ringinnenseitiger Behälterwandabschnitt 13, der einen in etwa zylindrischen Ringinnenraum 6 umgibt, ein unterer Behälterwandabschnitt 10, der dem horizontalen Bodenabschnitt 15 der Tiefung 2 gegenüberliegt, und ein entgegengesetzt zu dem unteren Behälterwandabschnitt 10 angeordneter, oberer Behälterwandabschnitt 11.

Der ringaußenseitige Behälterwandabschnitt 12 liegt dem vertikalen Wandabschnitt 14 der Tiefung 2 gasdicht an. Alternativ kann sich zwischen dem ringaußenseitigen Behälterwandabschnitt 12 und dem vertikalen Wandabschnitt 14 der Tiefung 2 ein Zwischenraum 16 befinden. Der untere Behälterwandabschnitt 10 liegt dem horizontalen Bodenabschnitt 15 der Tiefung 2 gasdicht an. Alternativ kann sich zwischen dem unteren Behälterwandabschnitt 10 und dem horizontalen Bodenabschnitt 15 der Tiefung 2 ein Zwischenraum 17 befinden.

Auf dem oberen Behälterwandabschnitt 11 ist eine Abdeckplatte 8 angebracht, durch welche der Ringinnenraum 6 nach oben hin im Wesentlichen gasdicht abgedichtet wird.

An dem ringinnenseitigen Behälterwandabschnitt 13 der Behälterwand 5 des Ringtanks 4 befindet sich ein Sicherheitsdruckventil 7, das in den Ringinnenraum 6 hinein ragt. Das Sicherheitsdruckventil 7 ist beispielsweise mittels eines Ventilkörpers mit Außengewinde in eine Gewindeöffnung des Ringtanks 4 eingeschraubt, was in Fig. 1 nicht näher dargestellt ist.

In das Sicherheitsdruckventil 7 ist wenigstens eine in Fig. 1 nicht näher dargestellte Sicherheitsgasabblaseinrichtung integriert, beispielsweise eine durch eine Berstscheibe oder eine Schmelzsicherung verschlossene Ventilöffnung, welche oberhalb einer wählbaren Auslösetemperatur, (beispielsweise 110°C) und/oder oberhalb eines wählbaren Tankdrucks, (beispielsweise 30 bar) die Ventilöffnung freigibt, so dass im Ringtank 4 befindliches Druckgas kontrolliert in den Ringinnenraum 6 abgeblasen werden kann.

In dem Bodenabschnitt 15 der Tiefung 2 ist in vertikaler Flucht zum Ringinnenraum 6 eine durch eine Verschlussplatte 20 verschlossenen Öffnung 22 (Durchbrechung) des Bodenabschnitts 15 angeordnet. Die Verschlussplatte 20 besteht aus einem schmelz- oder brennbaren Material. Die Sicherungsplatte kann im Falle des Einwirkens einer außerhalb des Kofferraums befindlichen (externen) Wärmequelle, wie einer Flamme 18, schmelzen oder abbrennen und somit die Öffnung 22 des Bodenabschnitts 15 der Tiefung 2 des Kofferraumbodens 3 freigeben. Ebenso kann die Verschlussplatte 20 im Falle des (gegebenenfalls zusätzlichen) Einwirkens einer innerhalb des Kofferraums befindlichen (internen) Wärmequelle, wie einer Flamme 19, die insbesondere von einem von dem Ringtank 4 aus dem Sicherheitsdruckventil 7 ausströmenden Gasstrom gespeist wird, schmelzen oder abbrennen und somit die Öffnung 22 des Bodenabschnitts 15 der Tiefung 2 des Kofferraumbodens 3 freigeben.

Durch die Wahl des Materials der Verschlussplatte 20 und insbesondere durch die Wahl der Plattendicke können in gewünschter Weise die Bedingungen für das Freigeben der Öffnung 22 des Bodenabschnitts 15 der Tiefung 2 eingestellt werden.

Durch ein thermisches Entfernen (Schmelzen oder Verbrennen) der Verschlussplatte 20 infolge des Einwirkens einer externen und/oder internen Wärmequelle 18, 19 kann eine in dem Bodenabschnitt 15 des Kofferraumbodens 3 geformte Öffnung 22 freigegeben werden, die ansonsten durch die Verschlussplatte 20 verschlossen ist. Durch die freigegebene Öffnung 22 im Bodenabschnitt 15 des Kofferraumbodens 3 kann der aus dem Sicherheitsdruckventil 7 ausströmende Gasstrom aus dem Kofferraum zur Fahrzeugaußenseite abgegeben werden. Ist der Gasstrom entzündet, wird auf diese Weise die interne Flamme 19 aus dem Kofferraum ins Freie geführt.

Der Ringinnenraum 6 dient als Druckraum, in dem sich ein relativer Überdruck von ausströmendem Gas aufbaut, so dass der Gasstrom praktisch vollständig durch die Öffnung 22 im Bodenabschnitt 15 der Tiefung 2 des Kofferraumbodens 3 geführt wird.

Falls der ringaußenseitige Behälterwandabschnitt 12 dem vertikalen Wandabschnitt 14 der Tiefung 2 gasdicht anliegt und/oder falls der untere Behälterwandabschnitt 10 dem horizontalen Bodenabschnitt 15 der Tiefung 2 gasdicht anliegt, formt der Ringinnenraum 6 in Verbindung mit der Abdeckplatte 8 und der (unversehrten) Verschlussplatte 20 ein gasdichtes Kompartment (bzw. einen Teil hiervon). Wird die Verschlussplatte 20 durchbrochen, so strömt sämtlicher vom Sicherheitsdruckventil 7 ausströmender Gaskraftstoff über die von der Verschlussplatte 20 frei gegebene Öffnung 22 ins Freie. Gleichwohl kann es zu diesem Zweck auch genügen, wenn sich zwischen dem ringaußenseitigen Behälterwandabschnitt 12 und dem vertikalen Wandabschnitt 14 der Tiefung 2 ein Zwischenraum 16 und/oder zwischen dem unteren Behälterwandabschnitt 10 und dem horizontalen Bodenabschnitt 15 der Tiefung 2 ein Zwischenraum 17 befinden. In diesem Fall ist es erforderlich, dass der Öffnungsdurchmesser der von der Sicherungsplatte 21 freigegebenen Öffnung 22 im Vergleich zu den Wandabständen der jeweiligen Zwischenräume so groß ist, dass aufgrund der zugehörigen Strömungswiderstände praktisch der gesamte aus dem Sicherheitsdruckventil 7 ausströmende Gaskraftstoff durch die von der Sicherungsplatte 21 freigegebenen Öffnung 22 ins Freie strömt.

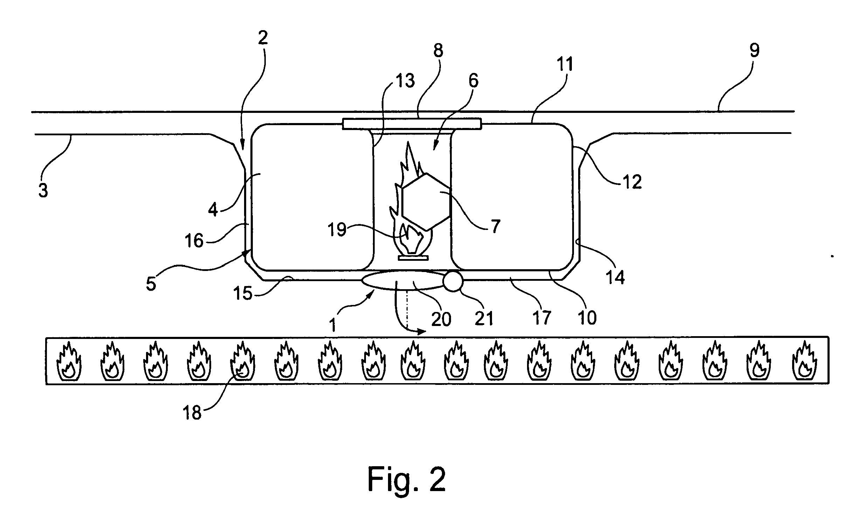

Es wird nun Bezug auf Fig. 2 genommen, worin eine schematische Darstellung des Aufbaus eines weiteren Ausführungsbeispiels der erfindungsgemäßen Sicherheitsanordnung für einen Gaskraftstoffbehälter eines Kraftfahrzeugs gezeigt ist. Um unnötige Wiederholungen zu vermeiden, werden lediglich die Unterschiede zur Ausführungsform von Fig. 1 beschrieben und erläutert. Ansonsten wird auf die oben zu Fig. 1 gemachten Ausführungen in vollem Umfang Bezug genommen.

In der in Fig. 2 dargestellten Ausführungsform der erfindungsgemäßen Sicherheitsanordnung ist die Verschlussplatte 20 an den Bodenabschnitt 15 der Tiefung 2 des Kofferraumbodens 3 mittels eines Scharniergelenks 21 angelenkt. Die Verschlussplatte 20 ist hierbei in der Öffnung 22 des Bodenabschnitts 15 beispielsweise kraft- und/oder reibschlüssig befestigt. Jede andere geeignete Befestigungsform ist möglich. Tritt Gaskraftstoff aus dem Sicherheitsdruckventil 7 des Ringtanks 4 aus, so baut sich, wie oben bereits erläutert wurde, ein Überdruck im Ringinnenraum 6 auf, der dazu führt, dass die Verschlussplatte 20 in Fig. 2 nach unten verschwenkt wird und die Öffnung 22 des Bodenabschnitts 15 der Tiefung 2 des Kofferraumbodens 3 freigibt. Die Befestigung der Verschlussplatte 20 an der Öffnung 22 ist so ausgebildet, dass der innerhalb des Ringinnenraums 6 aufgebaute Gasdruck genügt, die Verschlussplatte 20 zu verschwenken und die Öffnung freizugeben.

Das Scharniergelenk 21 könnte beispielsweise auch als ein Bimetall-Scharnier ausgebildet sein, welches so ausgebildet ist, dass die Verschlussplatte 20 bei Temperatureinwirkung die Öffnung 22 des Kofferraumbodens 3 freigibt.

### Bezugszeichenliste

1 Sicherheitsanordnung
2 Tiefung
3 Kofferraumboden
4 Ringtank
5 Behälterwand
6 Ringinnenraum
7 Sicherheitsdruckventil
8 Abdeckplatte
9 Teppichauflage
10 unterer Behälterwandabschnitt
11 oberer Behälterwandabschnitt
12 ringaußenseitiger Behälterwandabschnitt
13 ringinnenseitiger Behälterwandabschnitt
14 Wandabschnitt
15 Bodenabschnitt
16 Zwischenraum
17 Zwischenraum
18 externe Flamme
19 interne Flamme
20 Verschlussplatte
21 Scharniergelenk
22 Öffnung

## Patentansprüche

1. Kraftfahrzeug mit einem fahrzeuginnenseitig befindlichen Gastank (4) für Gaskraftstoff, mit einer Sicherheitsanordnung (1) mit einer den Fahrzeugboden (3) durchbrechenden, durch ein Verschlusselement (20) verschließbaren bzw. verschlossenen Sicherheitsöffnung (22), durch welche von dem Gastank (4) ausströmender Gaskraftstoff zur Fahrzeugaußenseite geführt werden kann, wobei das Verschlusselement (20) so ausgebildet ist, dass es die Sicherheitsöffnung (22) durch Einwirkung von Wärme und/oder Gasdruck des ausströmenden Gaskraftstoffs freigeben kann, **dadurch gekennzeichnet, dass** der aus dem Gastank (4) austretende Gaskraftstoff in einen Druckraum geblasen wird, welcher derart ausgebildet ist, dass sich bei unversehrtem Verschlusselement (20) ein Überdruck aufbauen kann.

2. Kraftfahrzeug nach Anspruch 1, bei welcher das Verschlusselement (20) so ausgebildet ist, dass es die Sicherheitsöffnung (22) durch Einwirkung von Wärme oberhalb einer wählbaren Schwelltemperatur freigibt.

3. Kraftfahrzeug nach Anspruch 1, bei welcher das Verschlusselement (20) so ausgebildet ist, dass es die Sicherheitsöffnung (22) durch Einwirkung von Gasdruck oberhalb eines wählbaren Schwelldrucks freigibt.

4. Kraftfahrzeug nach einem der vorher gehenden Ansprüche, bei welcher das Verschlusselement (20) aus einem Material mit einem niedrigeren Schmelzpunkt als das Material des Fahrzeugbodens (3) gefertigt ist.

5. Kraftfahrzeug nach einem der vorher gehenden Ansprüche 1 bis 3, bei welcher das Verschlusselement (20) aus einem brennbaren Material gefertigt ist.

6. Kraftfahrzeug nach einem der vorher gehenden Ansprüche 1 bis 5, bei welcher das Verschlusselement (20) mit wenigstens einer Sollbruchstelle versehen ist, die so ausgebildet ist, dass sie bei Einwirken eines wählbaren Gasdrucks des aus dem Gastank ausströmenden Gaskraftstoffs bricht.

7. Kraftfahrzeug nach einem der vorher gehenden Ansprüche 1 bis 6, bei welcher das Verschlusselement (20) mittels einer gelenkigen Verbindung (21) am Fahrzeugboden (3) angelenkt ist.

8. Kraftfahrzeug nach Anspruch 7, bei welcher die gelenkige Verbindung (21) aus einem bei Wärmeeinwirkung sich verformenden Bimetall besteht, welches so ausgebildet ist, dass es bei Wärmeeinwirkung oberhalb einer wählbaren Schwelltemperatur die Sicherheitsöffnung frei gibt.

9. Kraftfahrzeug nach Anspruch 1, bei welcher der Druckraum gasdicht verschlossen ist.

10. Kraftfahrzeug nach Anspruch 1 oder 9, bei welcher der Druckraum einen durch einen ringförmigen Gastank (4) geformten Ringinnenraum (6) umfasst.

11. Kraftfahrzeug nach einem der vorher gehenden Ansprüche 1 bis 10, bei welcher sich der Gastank innerhalb des Kofferraums des Kraftfahrzeugs befindet.

## Claims

1. A motor vehicle, comprising a gas tank (4) for gas fuel which is disposed on the inside of the vehicle, a safety arrangement (1) with a safety opening (22) which penetrates the vehicle floor (3) and which is closable or closed by a closing element (22), by means of which gas fuel flowing from the gas tank (4) can be guided to the outside of the vehicle, with the closing element (22) being arranged in such a way that it can release the safety opening (22) under action of heat and/or gas pressure of the outgoing gas fuel, **characterized in that** the gas fuel flowing out of the gas tank (4) is injected into a pressure chamber which is arranged in such a way that an excess pressure can build up when the closing element (20) is undamaged.

2. A motor vehicle according to claim 1, wherein the closing element (20) is arranged in such a way that it releases the safety opening (20) by action of heat above a selectable threshold temperature.

3. A motor vehicle according to claim 1, wherein the closing element (20) is arranged in such a way that it releases the safety opening (22) by action of a gas pressure above a selectable threshold pressure.

4. A motor vehicle according to one of the preceding claims, wherein the closing element (20) is made of a material with a lower melting point than the material of the vehicle floor (3).

5. A motor vehicle according to one of the preceding claims 1 to 3, wherein the closing element (20) is made of a combustible material.

6. A motor vehicle according to one of the preceding claims 1 to 5, wherein the closing element (20) is provided with at least one predetermined breaking point, which is arranged in such a way that it breaks under the action of a selectable gas pressure of the gas fuel flowing out of the gas tank.

7. A motor vehicle according to one of the preceding claims 1 to 6, wherein the closing element (20) is linked to the vehicle floor (3) by means of an articulated connection (21).

8. A motor vehicle according to claim 7, wherein the articulated connection (21) consists of a bimetal which deforms under the action of heat and which is arranged in such a way that it releases the safety opening under action of heat above a selectable threshold temperature.

9. A motor vehicle according to claim 1, wherein the pressure chamber is sealed in a gas-tight manner.

10. A motor vehicle according to claim 1 or 9, wherein the pressure chamber comprises an annular inner space (6) formed by an annular gas tank (4).

11. A motor vehicle according to one of the preceding claims 1 to 10, wherein the gas tank is disposed within the trunk of the motor vehicle.

## Revendications

1. Véhicule à moteur avec un réservoir de gaz (4) situé à l'intérieur du véhicule pour un carburant gazeux, avec un dispositif de sécurité (1) muni d'une ouverture de sécurité (22) traversant le plancher (3) du véhicule et pouvant être bouchée ou fermée par un élément de fermeture (20), à travers laquelle le carburant gazeux sortant du réservoir de gaz (4) peut être amené vers l'extérieur du véhicule, l'élément de fermeture (20) étant conformé de telle manière qu'il puisse libérer l'ouverture de sécurité (22) sous l'effet de la chaleur et/ou de la pression de gaz du combustible gazeux en train de sortir, **caractérisé en ce que** le combustible gazeux sortant du réservoir de gaz (4) est éjecté dans un espace sous pression qui est conformé de telle manière qu'une surpression puisse se constituer lorsque l'élément de fermeture (20) est intact.

2. Véhicule à moteur selon la revendication 1, dans lequel l'élément de fermeture (20) est conformé de façon à libérer l'ouverture de sécurité (22) sous l'effet de la chaleur au-dessus d'un seuil de température sélectionnable.

3. Véhicule à moteur selon la revendication 1, dans lequel l'élément de fermeture (20) est conformé de façon à libérer l'ouverture de sécurité (22) sous l'action de la pression de gaz au-dessus d'un seuil de pression sélectionnable.

4. Véhicule à moteur selon l'une des revendications précédentes, dans lequel l'élément de fermeture (20) est fabriqué dans un matériau ayant un point de fusion plus bas que le matériau du plancher (3) du véhicule.

5. Véhicule à moteur selon l'une des revendications 1 à 3, dans lequel l'élément de fermeture (20) est fabriqué dans un matériau combustible.

6. Véhicule à moteur selon l'une des revendications 1 à 5, dans lequel l'élément de fermeture (20) est muni d'au moins une zone prévue pour se rompre, conçue de façon à se rompre sous l'action d'une pression de gaz sélectionnable du combustible gazeux sortant du réservoir de gaz.

7. Véhicule à moteur selon l'une des revendications 1 à 6, dans lequel l'élément de fermeture (20) est articulé au moyen d'une liaison articulée (21) au plancher (3) du véhicule.

8. Véhicule à moteur selon la revendication 7, dans lequel la liaison articulée (21) se compose d'un élément bimétallique qui se déforme sous l'effet de la chaleur et qui est conçu de façon à dégager l'ouverture de sécurité sous l'effet de la chaleur au-dessus d'un seuil de température sélectionnable.

9. Véhicule à moteur selon la revendication 1, dans lequel l'espace sous pression est fermé de manière étanche au gaz.

10. Véhicule à moteur selon la revendication 1 ou 9, dans lequel l'espace sous pression comprend un espace intérieur annulaire (6) formé par un réservoir de gaz (4) annulaire.

11. Véhicule à moteur selon l'une des revendications 1 à 10, dans lequel le réservoir de gaz se trouve à l'intérieur du coffre du véhicule à moteur.
